# EUROPEAN PATENT SPECIFICATION

(11) **EP 2 629 606 B1**
(45) Date of publication and mention of the grant of the patent: **28.06.2017**
(21) Application number: 11773918.5
(22) Date of filing: 18.10.2011
(51) Int. Cl.: A01N 25/12, A01N 25/30, A01N 59/02, A01P 3/00

(54) **NOVEL BIOSULFUR FORMULATIONS**
NEUE BIOSCHWEFELFORMULIERUNGEN
NOUVELLES PRÉPARATIONS À BASE DE BIO-SOUFRE

(30) Priority: 18.10.2010 EP 10187939
(43) Date of publication of application: 28.08.2013
(73) Proprietor: Ceradis B.V., 6708 PW Wageningen (NL)
(72) Inventor: VAN DER KRIEKEN, Wilhelmus Maria, NL-6709 PD Wageningen (NL); RUTTEN, Wilhelmus Bernardus Albertus Hendrikus, NL-6709 PD Wageningen (NL)
(74) Representative: V.O.
(86) International application number: PCT/NL2011/050713
(87) International publication number: WO 2012/053894

(56) References cited:
- WO-A1-03/090541
- WO-A2-2008/084495
- WO-A2-2009/125435
- FR-A1- 2 232 996
- FR-A1- 2 374 852
- FR-A1- 2 599 592
- KLEINJAN ET AL.: TOPICS IN CURRENT CHEMISTRY, vol. 230, 2003, pages 44-57,
- Sjoerd Kijlstra, Albert Janssen, Blaise Arena: "Biological Process for H2S removal from (high pressure) Gas: the Shell-Paques/THIOPAQ Gas Desulfurization Process, Paper for Laurence Reid Conference", 1 February 2001 (2001-02-01), Proceedings of the Laurence Reid gas conditioning conference, XP009192511, pages 169-182, DOI: TIB Hannover, * page 174, line 175 *

## Description

Field: The present invention discloses formulations techniques for pesticides based on sulfur components derived from biological desulfurization plants.

Agricultural production worldwide is under permanent threat from numerous insects, mites, phytopathogenic fungi and bacteria. For the protection of yield and quality of products and to avoid economic losses, the application of agents that control plant diseases is an absolute requirement. Although the need for pesticides is generally acknowledged, there is an ongoing public concern about the negative impact of pesticides on the environment and on human health. As a consequence, the demands with respect to sustainability of chemical pest control are continually increasing.

One of the oldest active ingredients of fungicides, which is still widely used, is sulfur. Sulfur, in its elemental form (S⁰) is used on large scale against various plant pathogenic fungi, for instance *Venturia inequalis*, the cause of scab on apple and Uncinula necator, the cause of powdery mildew on grapevine, but also against mites and insects. It is considered a pesticidal ingredient with a very low impact on the environment, though it can cause skin, eye and lung irritation in users. Sulfur is one of the few compounds which are allowed as pesticide in organic agriculture.

The world production of sulfur was 64,000,000 metric tons in 2005, largely as byproduct of desulfurization of natural gas and petroleum (U.S. Geological Survey, Mineral Commodity Summaries, January 2006). The most important process for desulfurization is the Claus process, which includes an oxidation step of hydrogen sulfide (H2S) to sulfur dioxide (SO2) and a catalyzed reaction of H2S with SO2 to form elemental sulfur (S⁰) (Schreiner, B. 2008. Chemie in unserer Zeit 42: 378). The Claus process requires high temperatures and pressure and is cost effective mostly for large scale plants (Cline et al. 2003. Biological process for H2S removal from gas streams: The Shell-Paques/THIOPAQ™ gas desulfurization process, LRGCC 2003 Conference Proceedings, 1-17). The particle diameter of the Claus sulfur is important for the efficacy of the product as a pesticide on crops. Particles with a diameter between 1 and 8 µm are optimal, particles with a larger diameter are much less toxic for fungi and particles smaller than 1 µm can easily cause phytotoxic effects like chlorosis and necrosis (Emmett et al., 2003. "Sulphur formulations, particle size and activity - a review" in "Strategic Use of Sulphur in Integrated Pest and Disease Management (IPM) Programs for Grapevines". Final report to GWRDC; Report is available at the South Australian Research and Development Institute, http://www.sardi.sa.gov.au, at http://www.sardi.sa.gov.au/_data/assets/pdf_file/0018/46620/sulphur_report.p df).

Sulfur fungicides are generally formulated as wettable powders or water dispersible granules. These formulation types have several important drawbacks in production and usage. First of all, sulfur wettable powder formulations are dusty and pose a risk to the user, mostly because of eye irritation, inhalation risk and skin irritation (*e.g*. Elders, Top Wettable Sulphur, Material Safety Data Sheet). Granulated sulfur pesticides (water dispersible granule formulation) are less dusty than wettable powder formulations and pose a reduced risk to the user (compared to wettable powder formulations). However, to produce granules, a relatively high amount of energy is required which adds significantly to the costs of the production process.

The optimal product type, in terms of low production costs and user safety would be a liquid-based formulation such as a suspension concentrate (SC). Yet, using Claus sulfur, it is difficult to achieve the desired formulation characteristics for a suspension concentrate, such as storage stability and the ability to pour the liquid. A generally known problem of water-based Claus sulfur suspension concentrate formulations is that, during storage, sediment in the container tends to form a coalescent layer that cannot be re-suspended even when the container is shaken vigorously. Also, clusters of sulfur particles can be formed that block spray nozzles. It is noted that the fungicidal composition "lime sulfur", which is commonly sold in liquid formulation, does not contain elemental sulfur (S⁰), but is a mixture of calcium polysulfides formed by reacting calcium hydroxide with sulfur.

There is a clear need to formulate an aqueous composition comprising elemental sulfur that has improved storing and pouring characteristics compared to compositions comprising elemental sulfur that are known in the art. Said composition is preferably used in agriculture as a pesticide, including fungicide and insecticide, or as a fertilizer.

The present invention provides an aqueous suspension comprising elemental biosulfur and at least one surfactant, whereby the average particle size of the elemental sulfur is less than 2.5 micrometer. Surprisingly, it was found that elemental biosulfur having an average particle size of less than 2.5 micrometer can be formulated in a water-based suspension that can be stored and used according to standardized protocols.

Methods for estimating relevant characteristics of a suspension are known to the skilled person. The amount of product that remains in the packaging after emptying is preferably below 15%, more preferred below 10%, most preferred below 5%. The Collaborative International Pesticides Analytical Council (CIPAC) is an international, non-profit-oriented organization for the promotion of uniform methods for the analysis of pesticides and physico-chemical test methods for pesticide formulations. The pourability of a suspension (for example a suspension concentrate), can be determined according to CIPAC Method MT 148.

The viscosity of a suspension (for example a suspension concentrate), can be determined for example with a rheometer or viscometer, for example a Brookfield LV meter. The shear stress of the suspension is preferably determined at two different rotation velocities, for example at 12 rpm and 60 rpm. The ratio of the determined shear stress (low rotation velocity/high rotation velocity) is preferably between 2 and 2.5.

In addition, the stability of a SC is of utmost importance since an unstable product cannot be used in daily practice. In general, separation of a transparent watery top-layer on the product and precipitation of the particles on the bottom of the product packaging (bottle) are indicators of product-instability. An indication for stability of a product at room temperature over a prolonged period, for example 2 years, can be obtained by incubating the product at an elevated temperature, for example 35 °C, for a shorter period of time such as, for example, 3 months.

The term "elemental sulfur" refers to S⁰ sulfur. The term includes allotropes of elemental sulfur such as plastic (amorphous) sulfur, monoclinic sulfur, rhombic sulfur composed of S8 molecules, and other ring molecules such as S7 and S12. The type of sulfur to which this patent refers is "biosulfur" like it is provided by a recently discovered process termed THIOPAQ™ process (patent US6656249 Issued on December 2, 2003). The Thiopaq process was developed as an alternative to the Claus process. The Thiopaq process uses biological sulfur conversion processes leading to a type of elemental sulfur that is termed biosulfur, for biologically produced sulfur. This biosulfur has some unique properties, as compared to chemically produced sulfur such as, for example, by the Claus-process. Most important, biosulfur is more hydrophilic than chemically produced sulfur. The reason for this is not known. The purity of the biosulfur is preferably more than 80% of the total dry mass, more preferred more than 90% of the total dry mass, more preferred more than 95% of the total dry mass, most preferred more than 99% of the total dry mass.

That indeed biosulfur differs from chemically-produced sulfur is known and recognized in the art. For example, Kleinjan et al. (Kleinjan et al. 2003. Topics in Current Chemistry 230: 44-57) indicates that the density of biologically produced particles is lower than the density of orthorhombic sulfur. In addition, biologically produced sulfur particles have hydrophilic properties whereas orthorhombic sulfur is known to be hydrophobic (Janssen et al. 1999. Colloids and Surfaces A: Physicochemical and Engineering Aspects 151: 389-397). Moreover, other properties of chemically produced sulfur have been reported to differ from microbially produced sulfur (Seidel et al. 2006. Chemosphere 62: 1444-1453).

The present invention is based on the recognition that biosulfur differs from chemically-produced sulfur, and provides methods and means for the use of biosulfur in agricultural methods. It was surprisingly found by the present inventors that biosulfur with a particle size of less than 10 micrometer can be formulated in a water-based suspension that is stable and can be stored without the formation of sediment, in contrast to chemically-produced sulfur. In addition, biosulfur with a particle size of less than 10 micrometer, such as less than 2.5 micrometer, was found to be much less toxic to plants, when compared to chemically-produced sulfur. Moreover, the present inventors found that biosulfur is more effective as a biocide than chemically produced sulfur, providing the opportunity to reduce the amount of sulfur that is used in agriculture.

The term aqueous suspension refers to a suspension of elemental sulfur in a fluid, whereby the fluid comprises more than 50% water. The suspension has an increased resistance to sedimentation. A preferred suspension comprises between 10 and 1000 gram/liter of elemental sulfur particles according to the invention, more preferred between 100 and 900 gram/liter, most preferred between 500 and 800 gram/liter, more preferred about 700 gram/liter. The average particle size of the elemental sulfur particles is less than 2.5 micrometer, more preferred less than 2 micrometer, more preferred less than 1 micrometer, most preferred less than 0.8 micrometer. A preferred average particle size is between about 0.1 micrometer and about 0.8 micrometer. A most preferred average particle size is about 0.6 micrometer, ranging from 0.4- 1 micrometer. So far, biosulfur has not been formulated as a suspension, for example as a biocide such as a fungicide or insecticide, in which the average particle size of the elemental sulfur particles is less than 10 micrometer.

Methods for determining the average particle size of elemental sulfur particles are known in the art and include, for example, the actual size and morphology of the particles using a camera system, and the use of laser diffraction and dynamic light scattering. A preferred method employs laser diffraction, for example by the use of an ANALYSETTE 22 MicroTec plus particle size analyser.

The pH of an aqueous suspension according to the invention is preferably between 2 and 12, more preferred between 3 and 11, more preferred between 4 and 10, more preferred between 5 and 9. A most preferred pH is between 6 and 8 such as, for example, about 7. The pH of an aqueous suspension can be adjusted with a NaOH or HCl solution, if required.

The term surfactant, as used in this application, refers to a wetting agent that lowers the surface tension of a liquid and a spreading/dispersing agent that allows easier spreading and distribution of the sulfur particles.

Said at least one surfactant preferably comprises at least one anionic and/or at least one non-ionic surfactant. Said anionic surfactant is preferably selected from sodium lauryl sulphate, and sulfosuccinate type of surfactants. A more preferred anionic surfactant is selected from ethoxylated tristyrylphenol salts such as, for example, ethoxylated tristyrylphenol sulphate, for example 2,4,6-Tris [1-(phenyl) ethyl] phenyl- omega-hydroxypoly(oxyethylene) sulphate (Soprophor® 4D384), and ethoxylated tristyrylphenol phosphate, for example polyethylene glycol 2,4,6-tristyrylphenyl ether phosphate triethanolamine salt (Soprophor® FL); sodiumdioctylsulphosuccinate, for example Geropon® DOS; naphthalene sulphonate condensate, for example Morwet® D425; and sodiumlaurylsulphate, for example Heliwet™ NLS90.

Said non-ionic surfactant is preferably selected from the Witconol® line, the Emulpon® line and the Berol® line of Akzo Nobel; the Brij® line, the Synperonic® line and the Myrj® of Croda; the Antarox® line of Rhodia, the Serdox® and Servidox® lines of Elementis; poly(oxyethylene)x-sorbitane-monolaurate, polymethyl methacrylate-polyethylene glycol graft copolymer, and ethylene oxide/propylene oxide block copolymers. A preferred non-ionic surfactant is selected from poly(oxyethylene)x-sorbitane-monolaurate, for example TWEEN® 60, 61 or 65, polymethyl methacrylate-polyethylene glycol graft copolymer, for example Atlox™ 4913, ethylene oxide/propylene oxide block copolymer, for example Synperonic™ PE/L61.

Said at least one surfactant preferably comprises at least two surfactants, at least three surfactants, at least four surfactants, at least five surfactants, such as, for example, six surfactants, seven surfactants, eight surfactants, nine surfactants, or ten surfactants. Said at least two surfactants preferably comprise at least one wetting agent and at least one dispersing agent. A preferred dispersing agent is a naphthalene sulphonate condensate, for example sodium alkylnaphthalenesulfonate, formaldehyde condensate (Morwet® D425). A preferred wetting agent is selected from the groups of the phosphated di- or tristyrenephenol ethoxylates in the phosphate form and/or of lignin sulphonates. A more preferred wetting agent is ethoxylated tristyrenephenol phosphate, such as, for example, Soprophor® FL.

Said at least one surfactant is preferably present in an aqueous suspension according to the invention at a concentration of between 1 and 100 gram/liter, more preferred between 2 and 75 gram/liter, more preferred between 5 and 60 gram/liter, more preferred between10 and 50 gram/liter. Said surfactants in an aqueous suspension according to the invention comprising at least two surfactants are preferably present in a concentration of between 0.2 and 50 gram/liter per surfactant. The at least one wetting agent is preferably present in a concentration of between 0.2 and 100 gram/liter per surfactant, more preferred between 0.5 and 70 gram/liter, more preferred between 1 and 50 gram/liter. The at least one dispersing agent is preferably present in a concentration of between 0.2 and 100 gram/liter per surfactant, more preferred between 0.5 and 70 gram/liter, more preferred between 1 and 50 gram/liter.

Said at least one surfactant most preferably comprises sodium alkylnaphthalenesulfonate, formaldehyde condensate and ethoxylated tristyrenephenol phosphate. Said sodium alkylnaphthalenesulfonate, formaldehyde condensate is preferably present in a concentration of between 0.2 and 80 gram/liter per surfactant, more preferred between 1 and 50 gram/liter. Said sodium alkylnaphthalenesulfonate, formaldehyde condensate is most preferred present in a concentration of about 40 gram/liter. Said ethoxylated tristyrenephenol phosphate is preferably present in a concentration of between 0.2 and 80 gram/liter per surfactant, more preferred between 1 and 50 gram/liter. Said ethoxylated tristyrenephenol phosphate is most preferred present in a concentration of about 30 gram/liter.

Therefore, the invention provides an aqueous suspension comprising elemental biosulfur, whereby the average particle size of the elemental sulfur is less than 2.5 micrometer, further comprising at least two surfactants, comprising at least one wetting agent and at least one dispersing agent. Said suspension is preferably used in agriculture as a pesticide, including fungicide and insecticide, or as a fertilizer. A preferred dispersing agent is a naphthalene sulphonate condensate, for example sodium alkylnaphthalenesulfonate, formaldehyde condensate (Morwet® D425). A preferred wetting agent is selected from the groups of the phosphated di- or tristyrenephenol ethoxylates in the phosphate form and/or of lignin sulphonates. A more preferred wetting agent is ethoxylated tristyrenephenol phosphate, such as, for example, Soprophor® FL.

A preferred aqueous suspension according to the invention further comprises a thickening agent in a concentration of between 0.1 and 50 gram/liter, more preferred between 0.5 and 20 gram/liter, most preferred between 1 and 10 gram/liter. Said thickening agent is preferably selected from polysaccharides, such as starch, vegetable gum, synthetic polymers, hydrophilic organo-clay complexes and precipitated siliciumdioxide (Ketjensil, Akzo Nobel). A preferred thickening agent is a polysaccharide, more preferred a gum such as xanthan gum or a vegetable gum such as, for example, alginin, guar gum, locust bean gum. Most preferred is xanthan gum. A preferred xanthan gum is Kelzan® S/ RD/ASX or Rhodopol® 23D. A further preferred xanthan gum is a modified xanthan gum comprising succinoglycan such as, for example, Rheozan®. Rheozan® as a thickening agent is preferably present in a concentration of about 5 gram/liter. A composition of the invention may also comprise two or more different thickening agents such as, for example, a combination of xanthan gum and magnesium aluminium silicate.

An aqueous suspension according to the invention preferably comprises an antifoaming agent in a concentration of between 0.1 and 20 gram/liter. Said antifoaming agent is preferably selected from polydimethylsiloxane-based antifoaming agents. A most preferred antifoaming agent is an acetylenic diol such as 2,4,7,9-tetramethyl-5-decyn-4,7-diol, 3,6-dimethyl-4-octyn-3,6-diol and 3,5-dimethyl-1-hexyn-3-ol. A most preferred antifoaming agent is 2,4,7,9-tetramethyl-5-decyn-4,7-diol (Surfynol®-104E; Air Products, Allentown, PA). A composition of the invention may also comprise two or more different antifoam forming agents.

An aqueous suspension according to the invention may further comprise a biocide in a concentration of between 0.001 and 20 gram/liter, more preferred between 0.005 and 5 gram/liter, more preferred between 0.01 and 1 gram/liter. Preferred biocides are weak acid preservatives such as lactic acid, benzoic acid, propionic acid, citric acid and acetic acid, the alkali metal or alkali earth metal salt of the weak acids, ethyl parabenzoate, borax, calcium bisulfite, calcium disodium EDTA, dehydroacetic acid, and isothiazoles, for example 5-Chloro-2-methyl-4-isothiazolin-3-one (KATHON™, Rohm and Haas), and quaternary ammonium salts such as, for example, 1-(3-chloroallyl)-3,5,7-triaza-1-azoniaadamantane chloride (CTAC). A preferred biocide is a quaternary ammonium salt is provided by CTAC, which is stabilized with sodium bicarbonate (Dowicil®75). A composition of the invention may also comprise two or more different biocides. A further preferred biocide is Kathon™, which is preferably present in a concentration of about 0,04 gram/liter.

An aqueous suspension according to the invention may further comprise a second active ingredient such as a fungicide, insecticide, acaricide (miticide) and/or bactericide.

Examples of suitable fungicides comprise compounds such as conazole fungicides such as, for example, (RS)-1-(β-allyloxy-2,4-dichlorophenethyl)imidazole (imazalil; Janssen Pharmaceutica NV, Belgium) and N-propyl-N-[2-(2,4,6-trichlorophenoxy)ethyl] imidazole-1-carboxamide (prochloraz), thiazole fungicides such as, for example, 2-(thiazol-4-yl)benzimidazole (thiabendazole; e.g. the commercial product TECTO® Flowable SC of Syngenta, USA), methyl 1-(butylcarbamoyl)benzimidazol-2-ylcarbamate (benomyl), a nonsystemic phthalimide fungicide such as, for example, N-(trichloromethylthio)cyclohex-4-ene-1,2-dicarboximide (captan), N-(trichloromethylthio)phthalimide (folpet) (commercial product FOLPAN® (Makhteshim Agan International)), carbamate fungicides such as, for example, dimethyl 4,4'-(o-phenylene)bis(3-thioallophanate) (thiophanate-methyl; commercial product: TOPSIN® M (Cerexagri Inc), phosphites (salts and esters of phosphoric acid, H3PO3) and pyridine fungicides such as, for example, 3-chloro-N-(3-chloro-5-trifluoromethyl-2-pyridyl)-α,α,α-trifluoro-2,6-dinitro-p-toluidine (fluazinam; commercial product: SHIRLAN® ,Syngenta, Switserland). A most preferred fungicide is phosphite. A composition of the invention may also comprise two or more fungicides.

Examples of suitable insecticides comprise imidacloprid (commercial product: ADMIRE®, Bayer) Bacillus thuringiensis (commercial product: TUREX®, Certis USA), teflubenzuron (commercial product: NOMOLT ®, BASF), pymetrozine (commercial product: PLENUM®, Syngenta) and acetamiprid (Commercial product: GAZELLE®, Certis Europe). A most preferred insecticide is impidacloprid. A composition of the invention may also comprise two or more insecticides.

Examples of suitable acaricides comprise chlofentezine (commercial product: APOLLO®, Makhteshim), acequinocyl (commercial product: KAMEMYTE®, Arysta), spirodiclofen (commercial product: ENVIDOR®, Bayer CropScience), bifenazate (commercial product: FLORAMITE®, Certis Europe) and fenbutatinoxide (commercial product: TORQUE L®, BASF). A most preferred acaricide is spirodiclofen. A composition of the invention may also comprise two or more acaricides.

Examples of suitable bactericides comprise compounds such as copper salts (e.g. copper hydroxide, copper oxychloride, copper sulfate and Bordeaux mixture), streptomycin, the commercial product CITRICIDAL® (Bio/Chem Research) and validamycin. A most preferred bactericide is copper hydroxide. A composition of the invention may also comprise two or more bactericides.

It will be clear to the skilled person that an aqueous suspension according to the invention may comprise additional substances such as, for example, a sticking agent.

An aqueous suspension according to the invention is preferably used as a fertilizer, fungicide and/or an insecticide such as an acaricide. The aqueous suspension is preferably diluted with water prior to use as a fertilizer, fungicide and/or acaricide to contain between 1 and 80 gram/liter of elemental biosulfur, more preferred between 2 and 50 gram/liter, more preferred between 3 and 20 gram/liter, more preferred between 4 and 10 gram/liter of elemental sulfur. If required, a sticking agent is added to the diluted aqueous suspension. Said diluted aqueous suspension is used, for example, to control brown rot of peaches, powdery mildew of apples, gooseberries, hops, ornamentals, grapes, peaches, strawberries, and sugar beets, apple scab, gall mite on blackcurrant, peanut leafspot, mildew on roses, and mites on beans, carrots, lucerne, melons, and tomatoes. An aqueous suspension comprising between 1 and 80 gram/liter, more preferred between 2 and 50 gram/liter, more preferred between 3 and 20 gram/liter, more preferred between 4 and 10 gram/liter is preferably sprayed over a plant for use as a fungicide and/or an insecticide. An aqueous suspension comprising between 1 and 80 gram/liter is preferably applied to the soil after dilution in water for use as a fertilizer. It will be clear to the skilled person that higher concentrations (preferably more than 10 gram/liter) of biosulfur are acceptable for use as fertilizer, compared to the use as a fungicide and/or an insecticide (preferably less than 20 gram/liter).

The suspensibility of sulfur particles in a water dispersible product, for example a diluted aqueous suspension according to the invention is preferably at least 50 %, more preferred at least 60%, more preferred at least 70%, most preferred at least 80%, whereby the indicated percentages refer to the percentage of sulfur particles that are sustained from sinking. In general, the suspensibility is determined in a cylinder by determining the percentage of precipitated particles in the lower part of the cylinder after a certain time interval. As an alternative, the percentage of floating particles in the upper part of a cylinder is determined after a certain time interval. The suspensibility can be determined and reported according to CIPAC Method MT 15, MT 161 or MT 168 as appropriate. The suspensibility according to CIPAC MT 15 is preferably at least 80%.

The phytotoxicity of an aqueous suspension according to the invention, which is preferably diluted to a ready to use concentration less than 20 kg/liter, more preferred less than 15 kg/liter, more preferred less than 10 gram/liter of elemental biosulfur, when applied to crops is reduced compared to the phytotoxicity of an aqueous solution comprising elemental Claus sulfur. Elemental Claus sulfur with an average particle size of less than 1 micrometer has been reported to be phytotoxic ((Emmett et al., 2003. "Sulphur formulations, particle size and activity - a review" in "Strategic Use of Sulphur in Integrated Pest and Disease Management (IPM) Programs for Grapevines". Final report to GWRDC; Report is available at the South Australian Research and Development Institute; http://www.sardi.sa.gov.au). The small particles may penetrate through plant stomata and 'burn' plant tissue. In contrast, no phytotoxicity was observed when an aqueous suspension comprising biosulfur with an average particle size of less than 10 micrometer, such as less than 2.5 micrometer, such as about 0.6 micrometer, was applied to plants. Without being bound by theory, a reason for the reduced phytotoxicity of biosulfur may be that the biosulfur is more hydrophilic than Claus sulfur, preventing or reducing the availability of the biosulfur on the hydrophobic leaves of a plant.

The invention further provides a fertilizer and/or a biocide comprising an aqueous composition according to the invention. Said biocide is preferably an insecticide such as an acaricide and/or a fungicide.

The invention further provides a method for protecting an agricultural plant from a plant disease caused by a fungus and/or an arthropod, the method comprising applying to said agricultural plant an aqueous composition according to the invention. In a preferred method according to the invention, between 0.1 and 50 kg biosulfur is applied per hectare, more preferred between 0.5 and 25 kg, more preferred between 1 and 15 kg, more preferred between 2 and 10 kg of biosulfur per hectare of land on which the agricultural plant is grown. Said agricultural plant is preferably a vegetable, fruit or a flower plant. Said vegetable is preferably selected from tomato, bean, cucumber, eggplant and pea. Said fruit plant is preferably selected from peach, plum, apple, pear, blackberry, raspberry, cherry, citrus, gooseberry, currant, and grape. Said flower plant is preferably rose, chrysanthemum, carnation and gerbera. Said arthropod preferably is a mite. Said mite is preferably selected from mud mite, blister mite, red spider mite, petrobia mite, broad mite, citrus rust mite, flat mite, silver mite, bud mite, six spotted mite, blister mite, two spotted mite, and russet mite. Said fungus is preferably selected from fungi causing scab, mildew such as powdery mildew and downy mildew, botrytis, black spot, rust and other diseases such as, for example, brown rot. Sulfur prevents fungal spores from germinating, so it is preferably applied before a disease develops.

The efficacy of an aqueous suspension according to the invention, preferably diluted to a ready to use concentration less than 20 kg/liter, more preferred less than 15 kg/liter, more preferred less than 10 gram/liter of elemental biosulfur, is enhanced, when compared to the efficacy of an aqueous solution comprising elemental Claus sulfur. It was found that efficient protection against powdery mildew disease on grapevine was obtained with an aqueous suspension comprising half the concentration of elemental sulfur when present as biosulfur, compared to a similar suspension comprising elemental Claus sulfur. Similarly, efficient protection against powdery mildew on melon was effected with an aqueous suspension comprising half the concentration of elemental sulfur when present as biosulfur, compared to a similar suspension comprising elemental Claus sulfur.

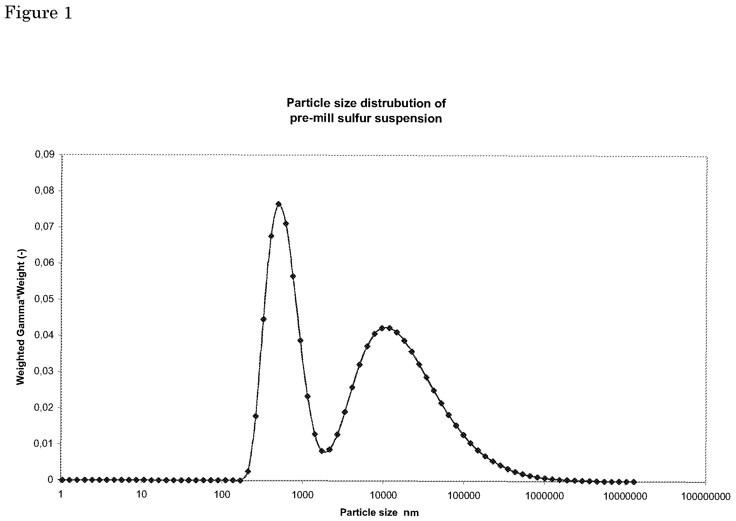

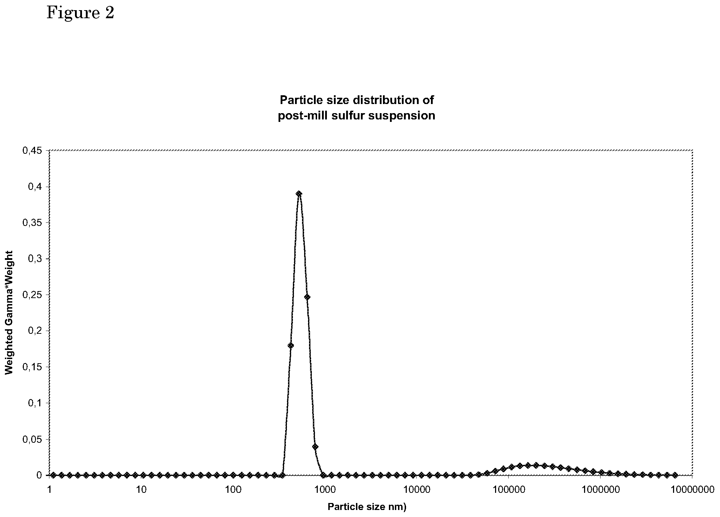

The average particle size of elemental biosulfur is less than 50 micrometer, ranging from 0.2 to 500 micrometer (see figure 1). The average particle size can be reduced by any method known in the art. For example, sonification of the sulfur cake (the product of the THIOPAQ™ process), will reduce the average particle size to about 2 micrometer. In a preferred method, sulfur cake (the product of the THIOPAQ™ process), is firstly washed with water to remove contaminants such as sulphate salts and bicarbonate. Said washing may be repeated, if necessary. At least one surfactant, a thickener and, optionally, an antifoaming agent is added to the washed sulfur cake (which is normally about 30% to 80 % elemental sulfur in water, whereby the sulfur is more than 99% elemental sulfur). The resultant suspension is milled, for example in a bead mill. The milling process is repeated until an average particle size of less than 10 micrometer, more preferred less than 2.5 micrometer is obtained. In general, an average particle size of about 0.6 micrometer was obtained if the milling process was performed two times (see figure 2). After milling, extra thickening agent can be added to obtain the optimal viscosity of the product.

### FIGURE LEGENDS

Figure 1. Particle size of biosulfur, formulated as described in Example 7. The product was not milled. The particle sizes vary from 0.2 to ± 500 micrometer.
Figure 2. Particle size of biosulfur, formulated as described in Example 7. The product was milled once with a bead mill to a particle size of in average 0.6 micrometer.

### EXAMPLES

### Example 1. Preparation of biosulfur particles with an average diameter of less than 2.5 micrometer

Biosulfur in the THIOPAQ™ process is formed as a wet sludge. For development of a suitable biosulfur formulation, the water was partly removed from the sludge by using a centrifuge or filter-press resulting in a wet sulfur cake. Possible contaminations were removed from the sulfur sludge by washing it with water. The cake contains about 40% to 70 % elemental sulfur in water. In the experiments described below the sulfur was washed in a filter press with water. The washed sulfur cake contained 62% elemental sulfur and 38% water. The purity of the sulfur was more than 99% after washing.

For development of a suitable biosulfur formulation the following procedure was followed.

First, water was mixed with surfactant(s), an antifoam agent and a biocide until all compounds were dissolved. Second, the sulfur wet cake was added and mixed vigorously until maximum dispersion is obtained (with relatively low viscosity). This mixture was milled using a bead mill resulting in particles with an average size of 0,6 micrometer (see figure 2). Finally, a thickening agent was added to prevent precipitation of the sulfur particles in the product. The types of surfactants, antifoam agents, biocides and thickeners that were tested are given below in the examples. The effect of the different formulation agents was assessed by using standard CIPAC methods (http://www.cipac.org/index.htm).

In a representative experiment, a solution of Soprophor FL (150 gram/liter), Morwet D425 (200 gram/liter), Surfynol 104E (15 gram/liter), and Kathon (200 mgram/liter) in water was prepared. One volumes of this solution was mixed with 5 volumes of the washed sulfur cake (62% elemental sulfur and 38% water). The resultant mixture was milled using a Dyno-mill KDL bead mill. After milling, xanthan gum was added to a final concentration of 0.9 gram/liter. The resulting aqueous suspension was stored until use at room temperature.

### Example 2. Effect of surfactants on wetting and dispersion of the sulfur particles in the ready to use spray solution.

The surfactants that were tested for their effect on suspensibility of the elemental biosulfur particles with an average particle size about 0,6 micrometer (obtained after milling a sulfur suspension in a bead mill apparatus) in the ready to use spray solution are displayed in table 1. The suspensibility was assessed by using CIPAC tests number MT 15 related to suspensibility of sulfur in ready to use spray solutions. The results are presented in table 1.

Briefly, the suspensibility was determined by placing 250 ml of an in water diluted suspension according to the invention, comprising 20 gram/liter of sulfur particles, to a 250 ml glass cylinder. The cylinder was capped, inverted 30 times, and allowed to stand undisturbed for 30 minutes. The upper 225 ml was removed by vacuum pump. The lower 25 ml was removed and dried, after which the amount of sulfur in the dry matter was determined.

**Table 1. Effect of surfactants on wetting and dispersion of the sulfur particles. Per liter of product 40 ml of each surfactant was added.**

| **Surfactant** | **Suspensibility (CIPAC MT 15)** |
|---|---|
| Soprophor 4D384 | < 20% |
| Soprophor FL | < 20 % |
| Soprophor FL plus Atlox 4913 | < 40% |
| Soprophor FL plus Synperonic PE/L61 | < 50% |
| Soprophor FL plus Tween 60 | < 60% |
| Soprophor 4D384 plus Atlox 4913 | < 30% |
| Soprophor 4D384 plus Morwet D425 | < 60% |
| Synperonic PE/L61 plus Morwet D425 | < 15% |
| Heliwet NLS 90 plus Morwet D425 | < 20% |
| Soprophor FL plus Morwet D425 | > 85 % |

From the results, it was concluded that a most preferred surfactant is a combination of Soprophor FL plus Morwet D425

### Example 3. Effect of a thickener on precipitation of the sulfur particles in a suspension

Effect of a thickener on viscosity of the sulfur product containing sulfur particles of 0,6 micrometer plus Soprophor FL and Morwet D425. The groups of thickeners that were tested are displayed in table 2. The viscosity was assessed by using CIPAC tests number 192 related to viscosity of sulfur product. The results are presented in table 2.

Briefly, the viscosity was determined for example with a Brookfield LV viscometer, by determining the shear stress of the suspension at 12 rpm and 60 rpm.

**Table 2. Effect of a thickener on the viscosity of the sulfur product containing sulfur particles plus Soprophor FL and Morwet D425.**

| **Thickner** | **Amount (g/l)** | **Brookfield LVT (spindle2) mPa.s** | | |
|---|---|---|---|---|
| | | **60 rpm** | **12 rpm** | **Ratio** |
| Guar gum | 15 | 120 | 216 | 1.8 |
| Magnesium aluminium silicate | 6 | 60 | 96 | 1.6 |
| Succinoglycan | 9 | 200 | 440 | 2.2 |
| Prec.siliciumdioxyde | 20 | 45 | 59 | 1.3 |
| Xanthan gum | 9 | 320 | 770 | 2.4 |

From these results, it was concluded that xanthan gum is a preferred thickener.

**Example 4. Effect of an antifoam compound on foam formation of the sulfur-surfactant(s)-thickener mixture to prevent excessive foam formation during production and handling of the product.** The groups of antifoam compounds that were tested are displayed in table 3. The results are presented in Table 3.

Briefly, the effect of an antifoam compound was determined visually after vigorously mixing of three volumes of a solution comprising the at least one surfactant, the antifoaming agent, and the biocide in water with 10 volumes of the washed sulfur cake. After mixing, the mixture was allowed to stand undisturbed for one minute. The absence of foam after mixing was indicated as "excellent". The presence of some foam after mixing that disappeared during the 1 minute incubation was indicated as "good". The presence of some foam after mixing that remained after the 1 minute incubation was indicated as "moderate". The presence of considerable amounts of foam after mixing that did not disappear after the 1 minute incubation was indicated as "poor".

**Table 3. Effect of an antifoam compound on foam formation of the sulfur-surfactant(s)-thickener mixture to prevent excessive foam formation during production and handling of the product.**

| **Antifoam compound** | **Amount (g/l)** | **Result** |
|---|---|---|
| Silicones (like Rhodorsill) | 5 | good performance |
| Surfynol 104E | 3 | good performance |

From these results, it was concluded that Surfynol 104E is a preferred antifoam agent.

### Example 5. Effect of a biocide on microbial spoilage. The groups of biocides that were tested are presented in Table 4.

The results are presented in Table 4.

In brief, the growth of a microbe in an aqueous suspension comprising elemental biosulfur was determined by incubating the aqueous suspension in a closed, air-tight bottle for one month, followed by determining the pressure within the bottle. An increase of the pressure inside the bottle is typical for the growth of a microbe. No increase in pressure is denoted as "excellent". An increase of between 0.01 and 0.1 bar is denoted as "good". An increase of more than 0.1 bar is denoted as "poor".

**Table 4. Effect of a biocide on microbial spoilage of the most preferred product presented**

| **Preservative** | **Amount (g/l)** | **Effect** |
|---|---|---|
| Dowicil 75 powder | 0,04 | good protection against spoilage |
| Kathon (Rhom and Haas) | 0,04 | excellent protection against spoilage |

From these results, it was concluded that Kathon is a preferred biocide.

### Example 6. Effect of different surfactant combinations on the stability of a product containing biosulfur (700 g/l, w/w) plus Xanthan gum (0,9 g/l, w/w) and Kathon (0,04 g/l, w/w).

The amount of each surfactant was 40 ml/l. The formulated products were stored at 35 °C before assessment of the top-layer and the amount of sedimentation.

Briefly, an aqueous suspension comprising elemental biosulfur (700 g/l, w/w) plus Xanthan gum (0,9 g/l, w/w) and Kathon (0,04 g/l, w/w) was incubated at 35 °C in a capped polythene bottle. The thickness of a visible layer at the top and the bottom was monitored at the indicated times. The height of a visible layer was expressed as a percentage of the total height of the suspension.

**Table 5 Effect of different surfactant combinations on the stability**

| Surfactants | | Layer at the top | | | Sedimentation | | |
|---|---|---|---|---|---|---|---|
| | | 1 month | 2 months | 3 months | 1 month | 2 months | 3 months |
| Soprohor FL | Morwet D425 | 0% | 0% | 2-5% | 0% | 0% | 0% |
| Soprophor FL | Atlox 4913 | 2% | 10% | 15% | 0% | 0% | 2% |
| Soprophor 4D384 | Morwet D425 | 0% | 8% | 20% | 0% | 5% | 10% |
| Soprophor 4D384 | Atlox 4913 | 10% | 15% | 17% | 0% | 10% | 16% |
| Pluronic PE/L61 | Morwet D425 | 10% | 20% | 28% | 1% | 20% | 45% |
| Heliwet NLS 90 | Morwet D425 | 50% | > 50% | > 50% | 40% | > 50% | > 50% |
| Soprophor FL | Tween 60 | 8% | 20% | 34% | 3% | 10% | 30% |
| Soprophor FL | Pluronic PE/L61 | 2% | 5% | 22% | 3% | 6% | 34% |
| Geropon DOS | Morwet D425 | > 50% | > 50% | > 50% | > 50% | > 50% | > 50% |
| Geropon DOS | Soprophor 4D384 | 15% | 32% | 36% | 8% | 10% | 22% |

From the results it is concluded that the surfactant combination of Soprophor FL plus Morwet D425 is optimal but other combinations may also be acceptable.

### Example 7. Effect of particle size of biosulfur on phytotoxicity.

It is well known that small particles (with an average size of less than 1 micrometer) of Claus sulfur cause phytotoxicity. To assess the phytotoxicity of small particles of biosulfur, a product comprising biosulfur (700 gram/liter), Soprophor FL (30 gram/liter), Morwet D425 (40 gram/liter), Surfynol 104E (3 gram/liter), and Kathon (0,04 gram/liter) was wet-milled using a bead-mill (DYnamill )to an average particle size of 0,6 µm (see figure 1). Xanthan gum was added to the milled product to a final concentration of 0.9 gram/liter. The resultant suspension was diluted to 6 gram/liter of biosulfur in water and tested in the field on grapevine, melon and strawberry in six subsequent sprays (weekly interval). It was found that the biosulfur did not cause any phytotoxicity.

### Example 8. Efficacy of biosulfur against crop diseases.

In comparative experiments, the efficiency of biosulfur against powdery mildew on grapevine was compared to a sulfur reference in two separate large trials. In one of the trials, the efficiency of biosulfur, formulated as in Example 7 and diluted in water, at 6.4 l/ha (4.5 kg/ha of sulfur) was found to be similar to the efficiency of Thiovit Jet at 12.5 kg/ha (10 kg/ha of sulfur). In a second independent trial, the efficiency of biosulfur, formulated as in Example 7 and diluted in water, at 4.8 l/ha (3.4 kg/ha of sulphur) was found to be improved compared to the efficiency of Thiovit Jet at 6 kg/ha (4.8 kg/ha of sulfur).

In a further comparative experiment, the efficiency of biosulfur against powdery mildew on melon was compared to a sulfur reference. The efficiency of biosulfur at 6 l/ha (4.5 kg/ha of sulfur) was found to be improved compared to the efficiency of Thiovit Jet at 7.5 kg/ha.

## Claims

1. An aqueous suspension comprising elemental biosulfur and at least one surfactant, wherein the average particle size of the sulfur is less than 2.5 micrometer.

2. The aqueous suspension according to claim 1, wherein the average particle size of the elemental biosulfur is less than 1 micrometer.

3. The aqueous suspension according to claim 1 or claim 2, comprising between 10 and 1000 gram/liter of elemental biosulfur particles.

4. The aqueous suspension according to any one of claims 1-3, comprising at least two surfactants.

5. The aqueous suspension according to claim 4, wherein the at least two surfactants comprise at least one wetting agent and at least one dispersing agent.

6. The aqueous suspension according to claim 5, wherein the dispersing agent is a naphthalene sulphonate condensate.

7. The aqueous suspension according to claim 5, wherein the dispersing agent is sodium alkylnaphthalenesulfonate, formaldehyde condensate.

8. The aqueous suspension according to claim 5, 6 or 7, wherein the wetting agent is a phosphated di- or tristyrenephenol ethoxylate.

9. The aqueous suspension according to any one of claims 1-8, further comprising a thickening agent.

10. The aqueous suspension according to claim 9, wherein the thickening agent is a polysaccharide.

11. The aqueous suspension according to claim 9 or 10, wherein the thickening agent is xanthan gum.

12. Use of an aqueous suspension according to any one of claims 1-11 as a fertilizer, fungicide and/or acaricide.

13. Use of an aqueous suspension according to any one of claims 1-11, whereby the aqueous suspension is sprayed over a plant or applied to the soil.

14. Use according to claim 12 or claim 13, for protection of plants against powdery mildew disease.

15. A method for protecting an agricultural plant from a plant disease caused by a fungus and/or an arthropod, the method comprising applying to said agricultural plant an aqueous composition according to any one of claims 1-11.

## Patentansprüche

1. Wässrige Suspension, umfassend elementaren Bioschwefel und mindestens ein Tensid, wobei die durchschnittliche Partikelgröße des Schwefels kleiner als 2,5 Mikrometer ist.

2. Wässrige Suspension nach Anspruch 1, wobei die durchschnittliche Partikelgröße des elementaren Bioschwefels kleiner als 1 Mikrometer ist.

3. Wässrige Suspension nach Anspruch 1 oder Anspruch 2, umfassend zwischen 10 und 1000 Gramm/Liter von elementaren Bioschwefel Partikeln.

4. Wässrige Suspension nach einem der Ansprüche 1-3, umfassend mindestens zwei Tenside.

5. Wässrige Suspension nach Anspruch 4, wobei die mindestens zwei Tenside mindestens ein Benetzungsmittel und mindestens ein Dispergiermittel umfassen.

6. Wässrige Suspension nach Anspruch 5, wobei das Dispergiermittel ein Naphthalinsulfonatkondensat ist.

7. Wässrige Suspension nach Anspruch 5, wobei das Dispergiermittel Natriumalkylnaphthalinsulfonat, Formaldehydkondensat ist.

8. Wässrige Suspension nach Anspruch 5, 6 oder 7, wobei das Benetzungsmittel ein phosphatiertes Di- oder Tristyrolphenolethoxylat ist.

9. Wässrige Suspension nach einem der Ansprüche 1-8, ferner umfassend ein Dickungsmittel.

10. Wässrige Suspension nach Anspruch 9, wobei das Dickungsmittel ein Polysaccharid ist.

11. Wässrige Suspension nach Anspruch 9 oder 10, wobei das Dickungsmittel Xanthangummi ist.

12. Verwendung einer wässrigen Suspension nach einem der Ansprüche 1-11 als Dünger, Fungizid und/oder Akarizid.

13. Verwendung einer wässrigen Suspension nach einem der Ansprüche 1-11, wobei die wässrige Suspension über eine Pflanze gesprüht oder auf den Boden aufgebracht wird.

14. Verwendung nach Anspruch 12 oder Anspruch 13 zum Schutz von Pflanzen gegen Echte Mehltau-Erkrankung.

15. Verfahren zum Schutz einer Agrarpflanze vor einer Pflanzenkrankheit, verursacht durch einen Pilz und/oder einen Arthropoden, das Verfahren umfassend Aufbringen einer wässrigen Zusammensetzung nach einem der Ansprüche 1-11 auf die Agrarpflanze.

## Revendications

1. Suspension aqueuse comprenant du biosulfure élémentaire et au moins un agent tensioactif, dans laquelle la taille moyenne des particules du soufre est inférieure à 2.5 micromètres.

2. Suspension aqueuse selon la revendication 1, dans laquelle la taille moyenne des particules du biosulfure élémentaire est inférieure à 1 micromètre.

3. Suspension aqueuse selon la revendication 1 ou la revendication 2, comprenant entre 10 et 1000 g/l de particules de biosulfure élémentaire.

4. Suspension aqueuse selon l'une quelconque des revendications 1 à 3, comprenant au moins deux agents tensioactifs.

5. Suspension aqueuse selon la revendication 4, dans laquelle lesdits au moins deux agents tensioactifs comprennent au moins un agent mouillant et au moins un agent dispersant.

6. Suspension aqueuse selon la revendication 5, dans laquelle l'agent dispersant est un condensat de naphtalène sulfonate.

7. Suspension aqueuse selon la revendication 5, dans laquelle l'agent dispersant est un alkyl-naphtalène sulfonate, un condensat de formaldéhyde

8. Suspension aqueuse selon la revendication 5, 6 ou 7 dans laquelle l'agent mouillant est un éthoxylate de di- ou tristyrènephénol phosphaté.

9. Suspension aqueuse selon l'une quelconque des revendications 1 à 8, comprenant en outre un agent épaississant.

10. Suspension aqueuse selon la revendication 9, dans laquelle l'agent épaississant est un polysaccharide.

11. Suspension aqueuse selon la revendication 9 ou 10, dans laquelle l'agent épaississant est la gomme de xanthane.

12. Utilisation d'une suspension aqueuse selon l'une quelconque des revendications 1 à 11, comme engrais, fongicide et / ou acaricide.

13. Utilisation d'une suspension aqueuse selon l'une quelconque des revendications 1 à 11, dans laquelle la suspension aqueuse est pulvérisée sur une plante ou appliquée sur le sol.

14. Utilisation selon la revendication 12 ou 13, pour la protection des plantes contre l'oïdium.

15. Procédé pour protéger une plante agricole d'une maladie végétale causée par un champignon et/ou un arthropode, le procédé comprenant l'application à ladite plante agricole d'une composition aqueuse selon l'une quelconque des revendications 1 à 11.
